# EUROPEAN PATENT APPLICATION

(11) **EP 3 073 469 A1**
(43) Date of publication of application: **28.09.2016**
(21) Application number: 16161358.3
(22) Date of filing: 21.03.2016
(51) Int. Cl.: G09B 23/30

(54) **SIMULATED ORGAN AND METHOD FOR PREPARING SIMULATED ORGAN**

(30) Priority: 23.03.2015 JP 2015059276
(71) Applicant: Seiko Epson Corporation, Shinjuku-ku Tokyo 163-0811 (JP)
(72) Inventor: Sekino, Hirokazu, Nagano, 392-8502 (JP); Ito, Jiro, Nagano, 392-8502 (JP); Fujita, Takuya, Nagano, 392-8502 (JP)
(74) Representative: Hoffmann Eitle

(57) **Abstract**

A simulated organ includes a plurality of simulated blood vessels having different strengths from each other.

## Description

### BACKGROUND

### 1. Technical Field

The present invention relates to a simulated organ.

### 2. Related Art

As a tool for practicing vascular injections, a structure in which a plurality of simulated blood vessels with different outer diameters is arranged is known (JP-UM-A-2-53067).

In the related-art technique, features other than the outer diameters of the simulated blood vessels are not taken into consideration. Therefore, for example, in the case of conducting a surgical simulation in which peripheral tissues are excised while blood vessels are preserved, it is difficult to reproduce conditions close to those in an actual living body.

### SUMMARY

An advantage of some aspects of the invention is that a simulated organ can be reproduced with conditions close to those in an actual living body.

The invention can be implemented in the following forms.
(1) An aspect of the invention provides a simulated organ. The simulated organ includes: a first simulated blood vessel; and a second simulated blood vessel having a different strength from the first simulated blood vessel. According to this configuration, the simulated organ can be reproduced with conditions close to those of an actual living body. This is because an actual organ includes blood vessels with different strengths.
(2) In the aspect, the first and second simulated blood vessels may be solid members and may have different outer diameters from each other. According to this configuration, a site where blood vessels with different outer diameters run in a living body can be reproduced.
(3) In the aspect, the first and second simulated blood vessels may be hollow members and may have different wall thicknesses from each other. According to this configuration, a site where blood vessels with different wall thicknesses run in a living body can be reproduced.
(4) In the aspect, the first and second simulated blood vessels may have the same outer diameter. According to this configuration, a site where blood vessels with the same outer diameter but with different strengths run in a living body can be reproduced.
(5) In the aspect, the first and second simulated blood vessels may have different outer diameters from each other. According to this configuration, a site where blood vessels with different wall thicknesses and outer diameters run in a living body can be reproduced.
(6) In the aspect, the simulated organ may further include a simulated tissue filling peripheries of the first and second simulated blood vessels. The simulated tissue may be excised by a liquid provided with an excision capability. According to this configuration, the simulated organ can be used in a surgical simulation using a liquid provided with an excision capability.

The invention can also be implemented in various other forms. For example, the invention can be implemented as a method for preparing a simulated organ.

### BRIEF DESCRIPTION OF THE DRAWINGS

The invention will be described with reference to the accompanying drawings, wherein like numbers reference like elements.
FIG. 1 shows the schematic configuration of a liquid ejection device.
FIG. 2 is a cross-sectional view showing a simulated organ.
FIG. 3 is a flowchart showing a method for preparing a simulated organ.
FIG. 4 is a cross-sectional view showing the state where simulated blood vessels have been fixed to a support member.
FIG. 5 is a cross-sectional view taken along 5-5 in FIG. 4.
FIG. 6 shows how a strength test on the material of the simulated blood vessels is conducted.
FIG. 7 is a graph showing experiment data obtained by the strength test.
FIG. 8 is a graph showing the relation between film thickness, material characteristics and sheet strength.
FIG. 9 is a graph showing the result of a rupture test in which the relation between rupture voltage and outer diameter is examined.
FIG. 10 is a table summarizing the results of rupture tests on various simulated blood vessels.

### DESCRIPTION OF EXEMPLARY EMBODIMENTS

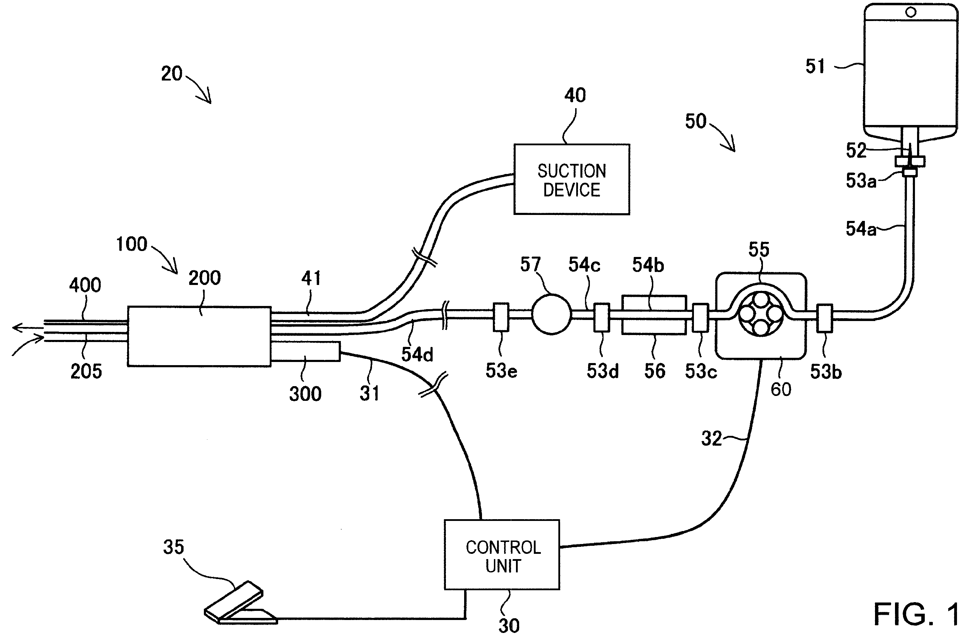

FIG. 1 schematically shows the configuration of a liquid ejection device 20. The liquid ejection device 20 is a medical device used in a medical institution and has the function of excising an affected part by ejecting a liquid to the affected part.

The liquid ejection device 20 has a control unit 30, an actuator cable 31, a pump cable 32, a foot switch 35, a suction device 40, a suction tube 41, a liquid supply device 50, and a handpiece 100.

The liquid supply device 50 has a water supply bag 51, a spike 52, first to fifth connectors 53a to 53e, first to fourth water supply tubes 54a to 54d, a pump tube 55, a blocking detection mechanism 56, and a filter 57. The handpiece 100 has a nozzle unit 200 and an actuator unit 300. The nozzle unit 200 has an ejection tube 205 and a suction tube 400.

The water supply bag 51 is made of a transparent synthetic resin and its inside is filled with a liquid (specifically, physiological saline solution). In this description, this bag is called the water supply bag 51 even if it is filled with a liquid other than water. The spike 52 is connected to the first water supply tube 54a via the first connector 53a. As the spike 52 stings the water supply bag 51, the liquid filling the water supply bag 51 becomes available to be supplied to the first water supply tube 54a.

The first water supply tube 54a is connected to the pump tube 55 via the second connector 53b. The pump tube 55 is connected to the second water supply tube 54b via the third connector 53c. A tube pump 60 has the pump tube 55 inserted therein. The tube pump 60 feeds the liquid inside the pump tube 55 from the side of the first water supply tube 54a toward the second water supply tube 54b.

The blocking detection mechanism 56 measures the pressure inside the second water supply tube 54b and thereby detects blocking inside the first to fourth water supply tubes 54a to 54d.

The second water supply tube 54b is connected to the third water supply tube 54c via the fourth connector 53d. To the third water supply tube 54c, the filter 57 is connected. The filter 57 collects foreign matters contained in the liquid.

The third water supply tube 54c is connected to the fourth water supply tube 54d via the fifth connector 53e. The fourth water supply tube 54d is connected to the nozzle unit 200. The liquid supplied through the fourth water supply tube 54d is intermittently ejected from the tip of the ejection tube 205 by the driving of the actuator unit 300. As the liquid is thus ejected intermittently, an excision capability can be secured with a low flow rate.

The ejection tube 205 and the suction tube 400 form a double-tube structure with the ejection tube 205 being the inner tube and the suction tube 400 being the outer tube. The suction tube 41 is connected to the nozzle unit 200. The suction device 40 sucks the content inside the suction tube 400 through the suction tube 41. By this suction, the liquid and excised piece or the like near the tip of the suction tube 400 are sucked.

The control unit 30 controls the tube pump 60 and the actuator unit 300. Specifically, the control unit 30 transmits drive signals via the actuator cable 31 and the pump cable 32 while the foot switch 35 is pressed down with a foot. The drive signal transmitted via the actuator cable 31 drives a piezoelectric element (not illustrated) included in the actuator unit 300. The drive signal transmitted via the pump cable 32 drives the tube pump 60. Therefore, while the user keeps his or her foot down on the foot switch 35, the liquid is intermittently ejected. When the user does not keep his or her foot down on the foot switch 35, the ejection of the liquid stops.

A simulated organ will be described hereafter. A simulated organ is also called a phantom. In this embodiment, a simulated organ is an artificial object whose part is to be excised by the liquid ejection device 20. The simulated organ in this embodiment is used in a surgical simulation for the purpose of performance evaluation of the liquid ejection device 20, practice of operation of the liquid ejection device 20, and the like.

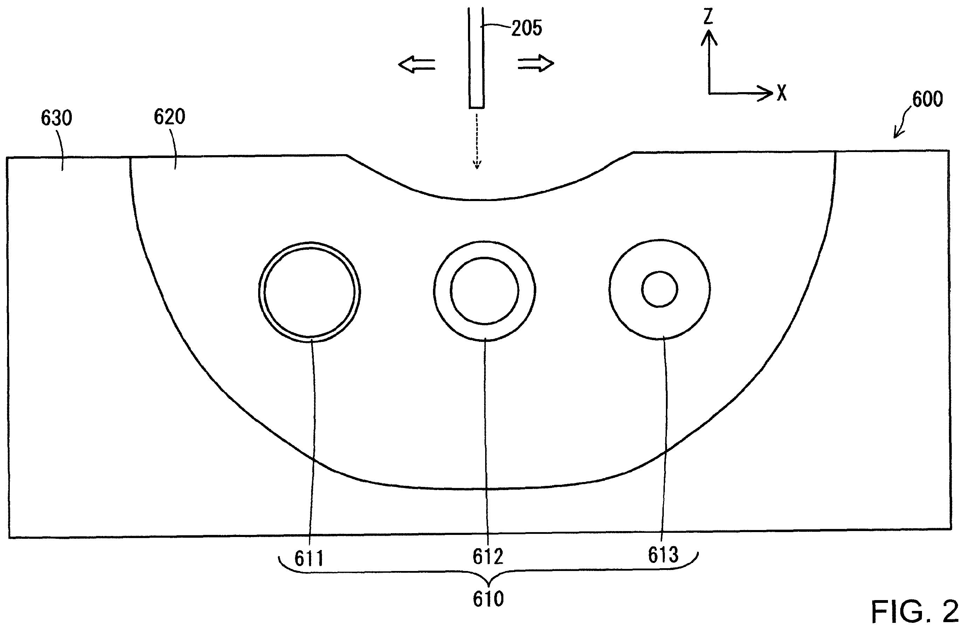

FIG. 2 is a cross-sectional view showing a simulated organ 600. The cross section shown in FIG. 2 is a Z-X plane. In this embodiment, the horizontal plane is defined as an X-Y plane, and the vertical direction (direction of depth) is defined as a Z-direction.

The simulated organ 600 includes a first simulated blood vessel 611, a second simulated blood vessel 612, a third simulated blood vessel 613, a simulated tissue 620, and a support member 630. The first simulated blood vessel 611, the second simulated blood vessel 612 and the third simulated blood vessel 613 may be collectively called simulated blood vessels 610.

The simulated blood vessels 610 are artificial obj ects simulating blood vessels in a living body (for example, human cerebral blood vessels). In this embodiment, simulated blood vessels 610 are formed as solid members. The simulated blood vessels 610 are members that should avoid damage in a surgical simulation. The first, second and third simulated blood vessels 611, 612, 613 are formed of the same material.

The simulated tissue 620 is an artificial object simulating peripheral tissues around blood vessels in a living body (for example, brain tissues) and fills the peripheries of the simulated blood vessels 610. The support member 630 is a metallic container which supports the simulated blood vessels 610 and the simulated tissue 620.

The liquid ejected intermittently from the ejection tube 205 gradually excises the simulated tissue 620. As the excision proceeds, the simulated blood vessels 610 become exposed. The exposed simulated blood vessels 610 may be subjected to the liquid ejection in some cases. When subjected to the ejection under conditions exceeding their strength, the simulated blood vessels 610 crack in the outer circumferential surface and end up in rupture. The strength here refers to an indicator that indicates the strength to withstand rupture caused by the liquid ejected from the ejection tube 205. The rupture here refers to breaking of a major part in the circumferential direction or breaking and splitting over the entire circumference.

As shown in FIG. 2, the first simulated blood vessel 611 is smaller in wall thickness than the second simulated blood vessel 612. Therefore, the first simulated blood vessel 611 has a lower strength than the second simulated blood vessel 612. The second simulated blood vessel 612 is smaller in wall thickness than the third simulated blood vessel 613. Therefore, the second simulated blood vessel 612 has a lower strength than the third simulated blood vessel 613.

Since the simulated blood vessels 610 having different strengths are thus embedded in the simulated tissues 620, performance evaluation of the liquid ejection device 20 and practice of operation of the liquid ejection device 20 or the like can be carried out under conditions closer to an actual organ. For example, when excising the simulated tissue 620 around the simulated blood vessels 610 by the liquid ejection device 20, the ease of preservation of the simulated blood vessels 610 can be evaluated under each condition of ejection.

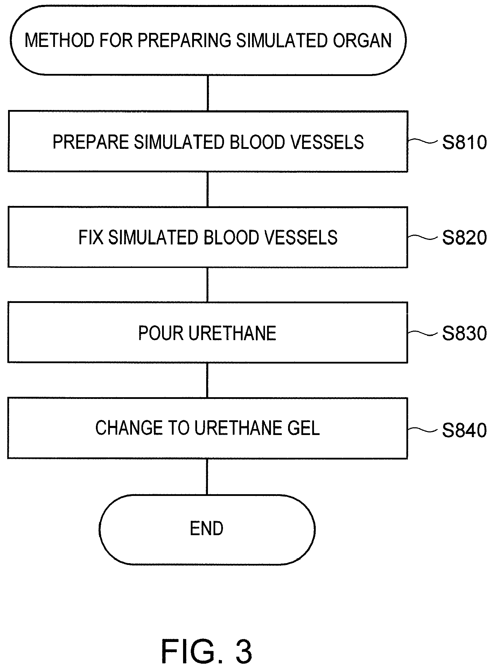

FIG. 3 is a flowchart showing a method for preparing the simulated organ 600. First, the simulated blood vessels 610 are prepared (S810). In this embodiment, PVA (polyvinyl alcohol) is employed as the material of the simulated blood vessels 610. In the case illustrated in FIG. 2, since the simulated blood vessels 610 are hollow members, the following preparation method is employed. That is, PVA before hardening is applied to the outer circumferences of extra fine wires, and the extra fine wires are pulled out after the hardening of the PVA. The outer diameter of the extra fine wires is made to correspond to the inner diameter of the blood vessels. The extra fine wires are made of metal, for example, formed by piano wires.

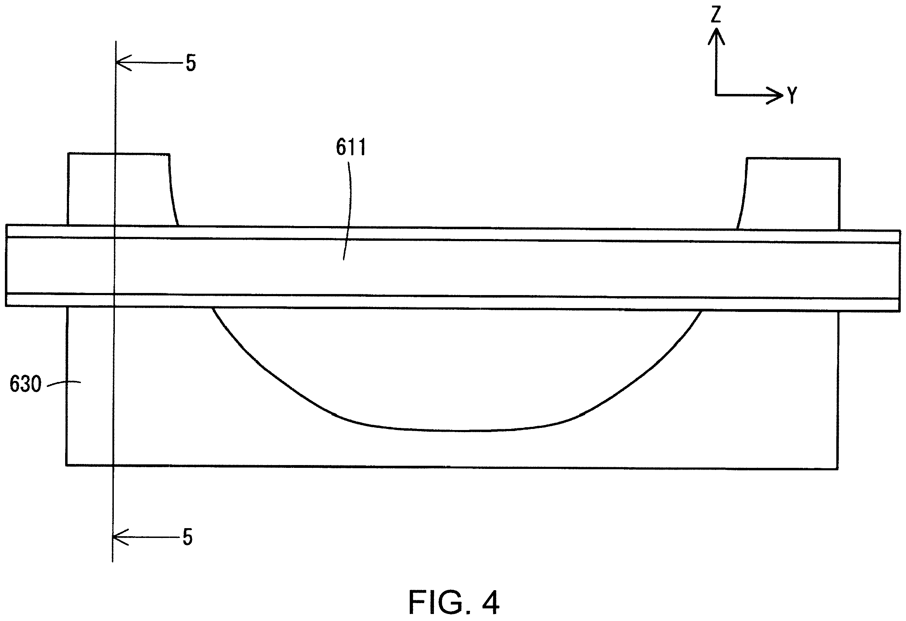

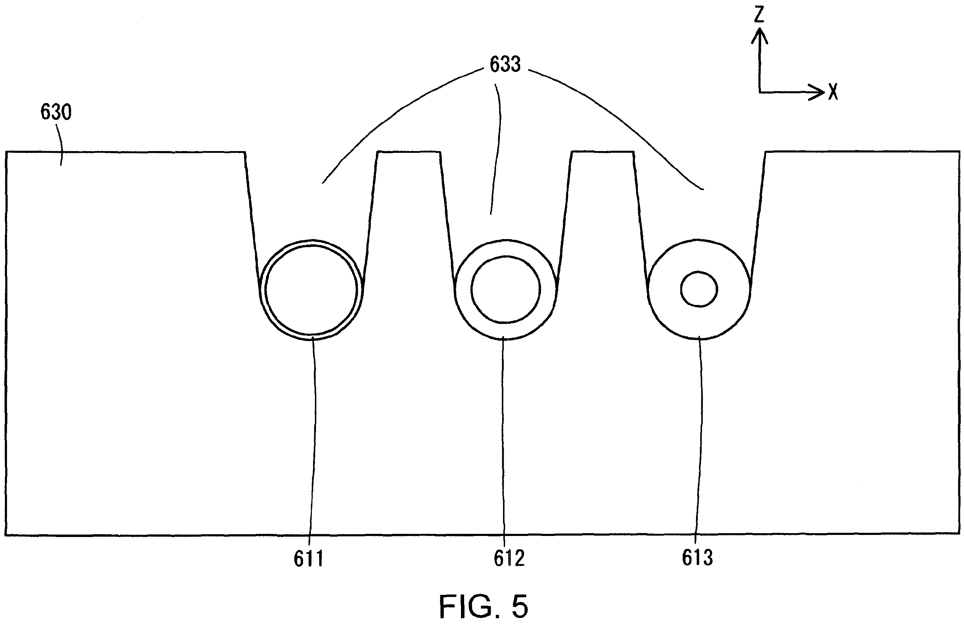

Next, the simulated blood vessels 610 are fixed to the support member 630 (S820). FIG. 4 is a cross-sectional view (Y-Z plane) showing the state where S820 has been executed. FIG. 4 shows a cross section along the longitudinal direction of the first simulated blood vessel 611. FIG. 5 shows a cross section taken along 5-5 in FIG. 4 (Z-X plane).

As shown in FIG. 5, grooves 633 are provided in the support member 630. The simulated blood vessels 610 are fitted into the grooves 633 in S820 and thus fixed to the support member 630.

Next, a stirred mixture of a base resin of urethane and a hardener is poured into the support member 630 (S830). Subsequently, the urethane changes into a urethane gel in the form of an elastomer gel (S840). Thus, the simulated tissue 620 is formed and the simulated organ 600 is completed.

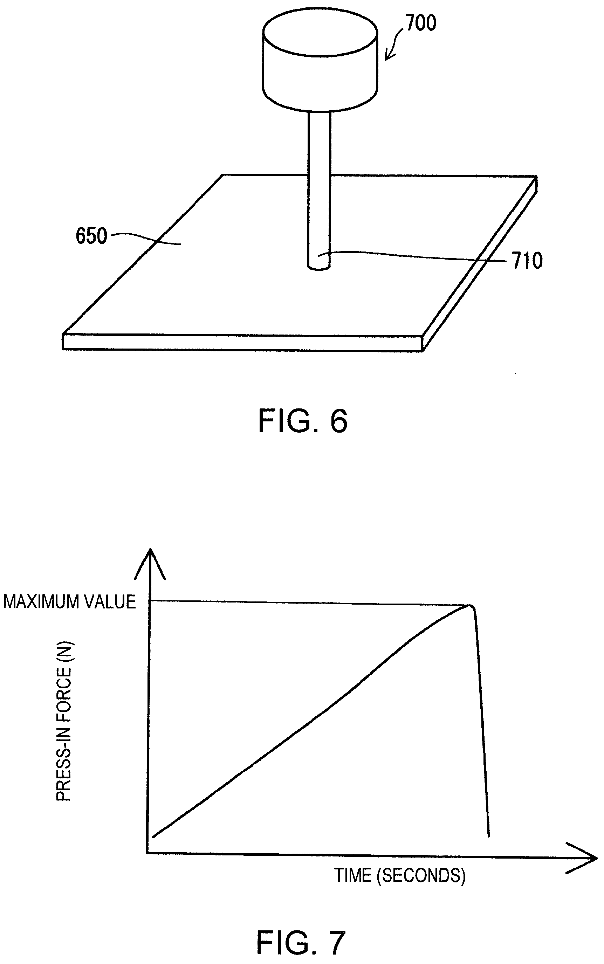

The strength of the simulated blood vessels 610 will be described. FIG. 6 is a view for explaining a strength test on the material of the simulated blood vessels 610.

A sheet 650 is a test sample formed by shaping the material of the simulated blood vessels 610 into a sheet. The sheet 650 is placed on a table (not illustrated) and fixed to the table at its peripheral edges. The table has a hole opening at a position opposite to a pin 700 via the sheet 650. In the strength test, the pin 700 is pressed into the sheet 650 so as to deform the sheet 650 until the sheet 650 breaks. A load cell (not illustrated) is used to press in the pin 700, and the press-in force is measured in real time.

FIG. 7 shows an example of experiment data obtained from the strength test. The vertical axis represents press-in force. The horizontal axis represents time. The pressing of the pin 700 is carried out at 1 mm/sec. Therefore, the press-in force increases almost linearly with time, as shown in FIG. 7.

The press-in force increases in this manner and eventually drops sharply. The sharp drop in the press-in force occurs because of the breaking of the sheet 650. Based on the sharp drop in the press-in force, the maximum value of the press-in force can be decided. The material strength is acquired as a stress value (MPa) by dividing the maximum value (N) of the press-in force by the area of a tip 710 of the pin 700 (in this embodiment, 0.5 mm²).

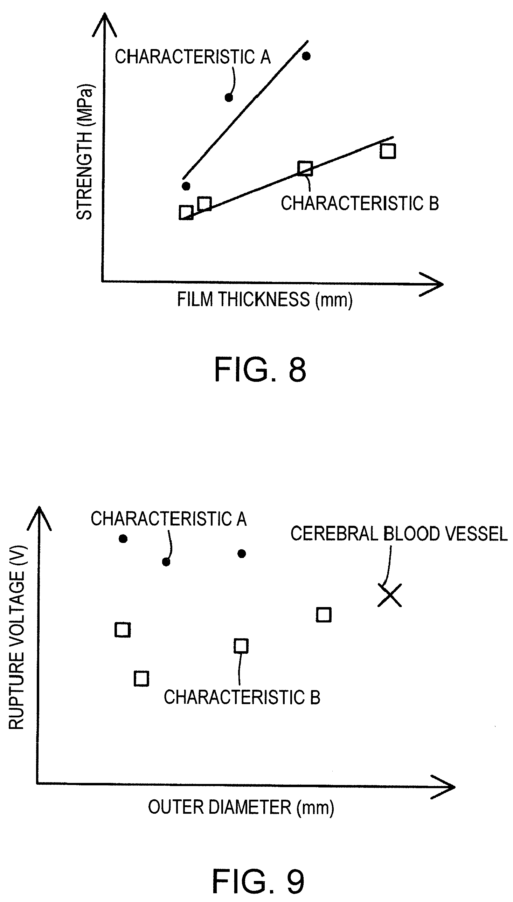

FIG. 8 is a graph showing the result of an experiment in which the influence of the film thickness and material characteristics on the strength of the sheet 650 is examined. The strength tested in the testing method described with reference to FIG. 7 depends on the film thickness and material of the sheet 650. Thus, with respect to each of two types of material characteristics (characteristics A, B), a strength test is conducted on the sheet 650 with its film thickness varied and their influence is examined.

The material with the characteristic A is prepared to have a higher strength than the material with the characteristic B. As is already known, the PVA forming the simulated blood vessels 610 can be changed in strength by changing preparation conditions. As shown in FIG. 8, with both of the characteristics A and B, it is confirmed that strength increases as the film thickness increases.

FIG. 9 is a graph showing the result of a rupture test in which the relation between rupture voltage and outer diameter is examined. In this test, the simulated blood vessel 610 prepared as a solid member is ruptured by the liquid ejection device 20. The simulated blood vessel 610 in this embodiment is prepared not only as the hollow member shown in FIG. 2 but also as a solid member.

The rupture voltage on the vertical axis refers to the maximum voltage required for rupturing the simulated blood vessel 610. The maximum voltage refers to the maximum value of AC voltage applied to the piezoelectric element. The outer diameter on the horizontal axis refers to the outer diameter of the simulated blood vessel 610.

As shown in FIG. 9, it can be seen that the rupture voltage is influenced by the outer diameter. FIG. 9 also shows the result in the case where an actual cerebral blood vessel is used. By making evaluation on the basis of the tests described with reference to FIGS. 8 and 9, it is possible to prepare a simulated blood vessel 610 having a rupture characteristic similar to the characteristic of the cerebral blood vessel. Moreover, by acquiring data about a blood vessel (for example, liver blood vessel or the like) other than the cerebral blood vessel, it is possible to prepare a simulated blood vessel 610 having a characteristic similar to that of the blood vessel.

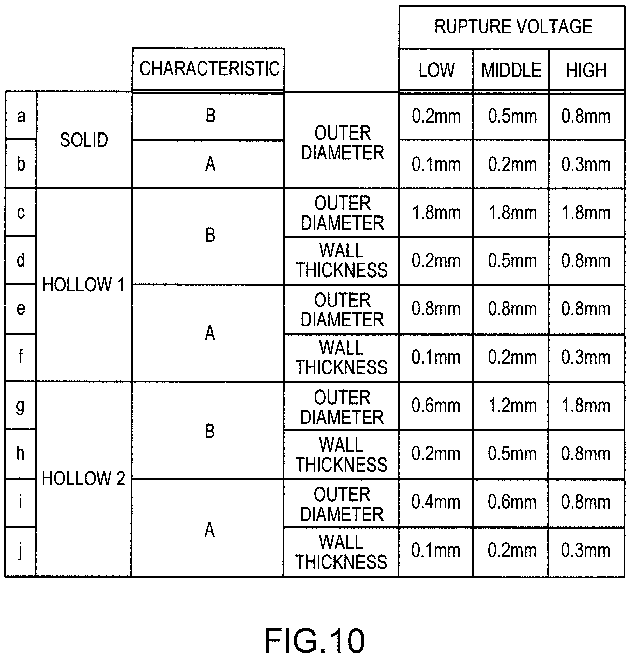

FIG. 10 is a table summarizing the results of rupture tests using the liquid ejection device 20 on various simulated blood vessels 610 prepared under various conditions. In FIG. 10, a and b show the results in the case of a solid member, c to f show the results in the case of a hollow member 1, and g to j show the results in the case of a hollow member 2.

The solid member is prepared by the following method. That is, PVA is poured and hardened in a glass tube having an inner diameter that is the same as a value set as the outer diameter of the simulated blood vessel 610, and subsequently the glass tube is cracked to take out the PVA formed in an elongated shape.

The hollow member 1 is a sample having a constant outer diameter and varying wall thickness for each of the characteristics A and B. The hollow member 2 is a sample with a varying outer diameter and varying wall thickness for each of the characteristics A and B. The preparation of the hollow members 1 and 2 uses the method described above (S810 in FIG. 3).

Each of the solid member and the hollow members 1 and 2 is prepared with various dimensions, using the materials having the characteristics A and B. Of these, the dimensions of each of a sample which ruptures at a low voltage, a sample which ruptures at a middle voltage, and a sample which ruptures at a high voltage are examined. The results are shown in the three columns on the right-hand side of FIG. 10.

In this way, the simulated blood vessels 610 having various strengths can be prepared, depending on whether the simulated blood vessel is solid or hollow, the characteristic of the material, and the adjustment of outer diameter and wall thickness. For example, simulated blood vessels as hollow members with different outer diameters and wall thicknesses may be prepared. Thus, using the simulated blood vessels 610 with various strengths, the simulated organ 600 can be prepared with conditions close to those of an actual living body.

The invention is not limited to the embodiment, examples and modifications in this specification and can be implemented with various configurations without departing from the scope of the invention. For example, technical features described in the embodiment, examples and modifications corresponding to technical features of each configuration described in the summary of the invention can be replaced or combined according to need, in order to solve a part or all of the foregoing problems or in order to achieve a part or all of the advantageous effects. Technical features can be deleted according to need, unless described as essential in the specification. For example, the following examples can be employed.

The simulated organ may be excised by measures other than a liquid that is intermittently ejected. For example, the simulated organ may be excised by a liquid that is continuously ejected or by a liquid provided with an excision capability by ultrasonic waves. Alternatively, the simulated organ may be excised by a metallic surgical knife.

The number of the simulated blood vessels may be any number equal to or greater than two.

The material of the simulated blood vessels is not limited to the above example. For example, the material may be a synthetic resin other than PVA (for example, urethane) or may be a natural resin.

The material of the simulated tissue is not limited to the above example. For example, the material may be a rubber-based material other than urethane or may be PVA.

The simulated blood vessels may be prepared using ejection and deposition (3D printing by an inkjet method or the like).

The simulated tissue may be prepared using 3D printing.

The simulated blood vessels and the simulated tissue may be collectively prepared using 3D printing.

The arrangement of the simulated blood vessels is not limited to the above example. For example, the simulated blood vessels may be bent into an S-shape or may be bent within the horizontal plane (X-Y plane).

While the configuration using the piezoelectric element as the actuator is employed in the embodiment, a configuration in which a liquid is ejected using an optical maser, or a configuration in which a liquid is pressurized by a pump or the like and thus ejected, may be employed. The configuration in which a liquid is ejected using an optical maser refers to the configuration in which a liquid is irradiated with an optical maser to generate air bubbles in the liquid, so that a pressure rise in the liquid caused by the generation of the air bubbles can be utilized.

## Claims

1. A simulated organ comprising:
a first simulated blood vessel; and
a second simulated blood vessel having a different strength from the first simulated blood vessel.

2. The simulated organ according to claim 1, wherein
the first and second simulated blood vessels are solid members and have different outer diameters from each other.

3. The simulated organ according to claim 1, wherein
the first and second simulated blood vessels are hollow members and have different wall thicknesses from each other.

4. The simulated organ according to claim 3, wherein
the first and second simulated blood vessels have the same outer diameter.

5. The simulated organ according to claim 3, wherein
the first and second simulated blood vessels have different outer diameters from each other.

6. The simulated organ according to any one of the preceding claims, further comprising a simulated tissue filling peripheries of the first and second simulated blood vessels,
wherein the simulated tissue is excised by a liquid provided with an excision capability.

7. A method for preparing a simulated organ, the method comprising:
preparing a first simulated blood vessel and a second simulated blood vessel having a different strength from the first simulated blood vessel, by 3D printing.
